# EUROPEAN PATENT SPECIFICATION

(11) **EP 0 446 904 B1**
(45) Date of publication and mention of the grant of the patent: **31.05.1995**
(21) Application number: 91103857.8
(22) Date of filing: 13.03.1991
(51) Int. Cl.: F16D 65/52, F16D 55/22

(54) **Electromagnetic brake**
Elektromagnetische Bremse
Frein électromagnétique

(30) Priority: 13.03.1990 FI 901248
(43) Date of publication of application: 18.09.1991
(73) Proprietor: KCI-KONE CRANES INTERNATIONAL OY, SF-5830 Hyvinkää (FI)
(72) Inventor: Lindberg, Teppo, SF-05430 Nuppulinna (FI)
(74) Representative: Zipse + Habersack

(56) References cited:
- DE-A- 2 316 809
- DE-A- 2 655 552
- DE-A- 3 733 654
- DE-B- 2 164 542
- US-A- 3 613 838
- US-A- 3 833 103
- US-A- 4 966 255

## Description

The present invention relates to an electromagnetic brake as defined in the introductory part of claim 1.

In electromagnetic disc brakes, due to the wear of the friction surfaces and the brake wheel, the air gap formed between the electromagnet coil and the anchor plate in the closed position of the brake increases, leading to a decreased attraction of the magnet, difficulties in the releasing of the brake and a decreased spring force. The result is a reduced brake torque. In addition, the large air gap increases the speed of the anchor plate movement, thus increasing the force applied to the friction surfaces. The result of this is a high peak in brake torque which imposes a stress on the brake and other structures and deteriorates the operating characteristics of the brake. Moreover, the reliability of the brake suffers due to the higher stress level, and the stresses may become uncontrollable due to insufficient servicing.

FI publication 75653 proposes an electromagnetic disc brake in which, when the brake is closed, a constant gap between the electromagnet coil and the anchor plate is maintained by means of a stepless adjusting device provided with balls running in groove tracks at that end where the electromagnet frame is located or with a wedge placed between the frame and the electromagnet coil, said wedge moving downwards due to its own weight, thereby adjusting the size of the air gap.

The object of the present invention is to achieve improved adjustment of the air gap in an electromagnetic brake. The features characteristic of the electromagnetic brake of the invention are presented in the claims. The solution of the invention allows a smaller brake magnet to be used.

In the following, the invention is described in detail by referring to the attached drawings, in which
Fig. 1 presents a disc brake constructed as provided by the invention.
Fig. 2 illustrates adjustment using a back wedge.

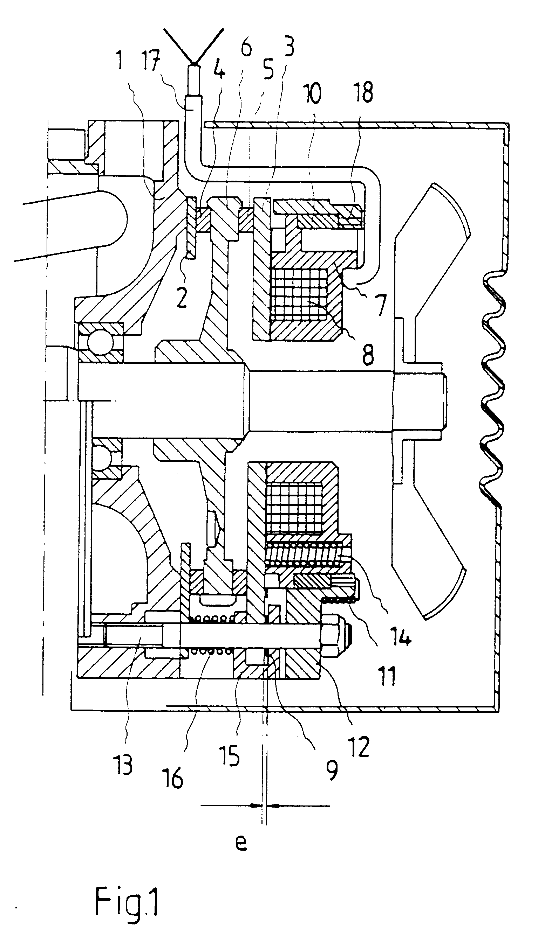

Fig. 1 represents an electromagnetic brake as used in an electric motor, e.g. the hoisting motor of a crane, comprising an adjustment system for compensating the wear of the friction material.

The brake comprises an end shield 1, to which a friction plate 2 is attached. Between the friction plate and an anchor plate 3, which are provided with friction surfaces 4 and 5, is a brake wheel 6. Next to the anchor plate 3 is an electromagnet comprising a magnet housing 7, with its groove pointing towards the anchor plate 3, and a winding 8.

With the wear of the friction material, the anchor plate 3 and the electromagnet move towards the brake wheel 6. The anchor plate motion is achieved by means of a self-locking washer 9 and the magnet housing motion by means of a wedge ring 10 moved by a coiled spring 11.

The wedge housing 12 is attached to the end shield 1 with stud bolts 13. These constitute the frame of the brake. A braking torque is achieved by means of brake springs 14 whose thrust is received by the electromagnet, which again is backed by the frame (wedge housing 12) via the wedge ring 10. The friction plate 2 and the anchor plate 3 cannot rotate as they are retained by the stud bolt 13. The anchor plate 3, placed in a retainer 15 having a U-shaped crosssection, a front flange pressed against a spring 16 on the stud bolt and a rear flange with a washer 9, can move axially along the stud bolt 13. The retainer has a backlash e relative to the anchor plate 3, permitting an equal anchor plate movement even in the back direction of the washer. The magnet can move axially.

In a situation where no current is flowing in the electromagnet, the anchor plate 3 is pressed by the springs 14 against the friction surface. With the wear of the friction material, the anchor plate 3 moves left against the brake wheel, moving the washer 9 along with it. Therefore, the width of the air gap between the magnet 7, 8 and anchor plate 3 increases.

When a current is supplied via conductor 17 to the magnet to release the brake, the anchor plate 3 and magnet 7, 8 will move towards each other at acceleration rates determined by the forces acting on the objects in question. Spring 16 ensures a maximal acceleration of the anchor plate 3 relative to the magnet, minimizing the displacement of the magnet during attraction, with the result that a maximal working clearance (release clearance) between the brake wheel 6 and anchor plate 3 is achieved.

Adjustment of the air gap is effected by the washers 9, which only allow the anchor plate 3 to move away from the brake wheel by a preset clearance. During attraction by the magnet, the anchor stops at a position determined by the washer, and the magnet 7, 8, being slower to move, now moves up to the anchor. If the friction surfaces are worn, a gap will appear between the magnet and the wedge housing 12, and this gap will be filled by the wedge ring 10, which is turned by spring 11.

Mounted in holes provided at the end of the wedge housing 12 are spring-loaded pins 18 with their ends protruding between the wedge housing 12 and the wedge ring 10. The pins are designed to hold the ring 10 immovable during attraction while the magnet 7, 8 is still moving before the anchor 3 is stopped by the washer. Otherwise, in a situation where the friction surfaces are still unworn, the brake would tend to get stuck as the wedge world immediately fill any clearance appearing between the wedge housing and the magnet upon the slightest movement of the latter.

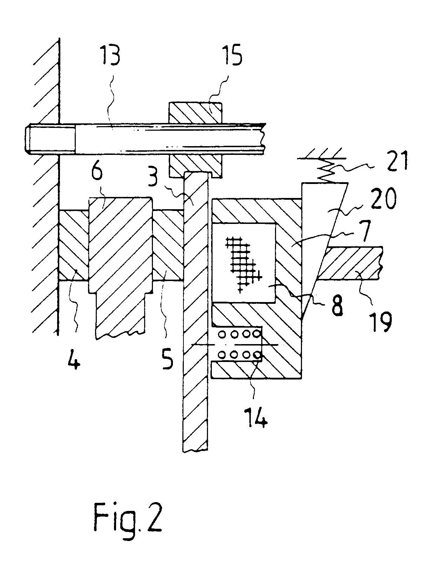

Fig. 2 illustrates a solution using back wedge adjustment, in which the anchor plate 3 is pressed against the brake wheel 6 by a spring 14 backed by the magnet 7, 8. Between the magnet and the back stop 19 is a downward-pointing wedge 20 loaded by a spring 21. As the brake is released, the anchor plate is drawn away from the brake wheel through a distance corresponding to the backlash of the retainer 15, which is provided with a washer (not shown).

With the wear of the friction material, the anchor plate 3 pushes the retainer 15 towards the brake wheel 6. Thus, when the brake is released, the anchor plate stops before hitting the magnet 7, 8, which therefore moves towards the brake wheel. A gap now appears between the wedge and the magnet. The gap is filled as the wedge 20 is moved by the spring 21.

It is obvious to a person skilled in the art that different embodiments of the invention are not restricted to the examples described above, but that they may instead be varied within the scope of the following claims. For instance, instead of pins it is possible to use an O-ring in the groove of the wedge ring, or a flexible wedge ring or a combination of a stud and a cup spring.

## Claims

1. Electromagnetic brake, comprising a brake wheel (6), at least one friction surface (4,5) touching the wheel during braking and attached to an anchor plate (3) moved by one or more brake springs (14) or by other members used to transmit the braking power, at least one electromagnet (7,8) which, together with the anchor plate, disengages the friction surface from contact with the brake wheel when a current is supplied to the magnet, and means for compensating the wear of the friction surface, said means comprising a wedge ring (10) or wedge (20) backing the magnet (7,8), and a spring (11,21) loading said wedge ring (10) or wedge (20), **characterized** in that the means for compensating the wear of the friction surface consists of at least one retainer (15) mounted on a bolt or equivalent (13) lying in the axial direction of the brake, which retainer (15), with the wear of the friction material, moves with the anchor plate (3) towards brake wheel (6) and moving a uni-directional element (9) along with it, said uni-directional element (9) limiting the motion of the anchor plate (3) away from the brake wheel (6) and maintaining a backlash (e) relative to the anchor plate (3), necessary for the release of the brake.

2. Brake according to claim 1, **characterized** in that the brake is provided with a coiled spring (11) or some other type of spring placed in the wedge housing (12) and serving to turn the wedge ring to produce a force moving the wedge ring (10) towards the brake wheel.

3. Brake according to claim 1, **characterized** in that it is provided with at least one spring-loaded pin (18), O-ring or other flexible element placed in the wedge housing/wedge ring and protruding towards the wedge ring/wedge housing, said pin(s) serving to prevent wedge ring motion towards the brake wheel arising from causes other than wear of the friction material.

4. Brake according to any one of the preceding claims, **characterized** in that the retainer (15) is essentially U-shaped in cross-section, allowing the anchor plate (3) to be fitted between the two shanks of the retainer to allow axial motion of the plate, and that the directional element (9) is a self-locking washer placed in the retainer, or a washer structure in itself comprising a retainer.

5. Brake according to any one of the preceding claims, **characterized** in that the brake is provided with at least one auxiliary spring (16) placed on a bolt or equivalent (13) between the retainer and the end shield of the motor to be braked to increase the rate of acceleration of the anchor (3) during the releasing of the brake.

6. Brake according to any one of the preceding claims, **characterized** in that the retainer and the wedge housing are placed on a stud bolt (13) going through the wedge housing and screwed into the end shield (1) of the motor to be braked.

7. Brake according to any one of the preceding claims, **characterized** in that the brake is provided with a spring (21) for pressing the wedge (20) into the gap between the magnet and the back stop (19) to produce a force moving the magnet towards the brake wheel.

## Patentansprüche

1. Elektromagnetische Bremse, umfassend eine Bremsscheibe (6), zumindest einen Bremsbelag (4,5), der die Scheibe während des Bremsens berührt und an einer Ankerplatte (3) montiert ist, die durch eine oder mehrere Bremsfedern (14) oder durch andere Teile bewegt wird, um die Bremskraft zu übertragen, zumindest einen Elektromagneten (7,8), der zusammen mit der Ankerplatte den Bremsbelag aus seinem Kontakt mit der Bremsscheibe löst, wenn dem Magneten Strom zugeführt wird, und eine Einrichtung zur Kompensation der Abnutzung des Bremsbelages, welche Einrichtung einen Keilring (10) oder einen Keil (20) umfaßt, der den Magneten (7,8) abstützt, und eine Feder (11,21), die den Keilring (10) oder Keil (20) vorspannt,
dadurch **gekennzeichnet**,
daß die Einrichtung zur Kompensation der Abnützung des Bremsbelages aus zumindest einer Aufnahme (15) besteht, die an einem Bolzen oder dergleichen (13) befestigt ist, welcher in axialer Richtung der Bremse angeordnet ist, welche Aufnahme (15) sich mit der Abnutzung des Bremsbelages mit der Ankerplatte (3) in Richtung auf die Bremsscheibe (6) bewegt und ein unidirektionales Element (9) mitbewegt, welches unidirektionale Element (9) die Bewegung der Ankerplatte (3) von der Bremsscheibe (6) hinweg begrenzt und relativ zur Ankerplatte (3) ein Spiel (e) aufrechterhält, welches für die Freigabe der Bremse notwendig ist.

2. Bremse nach Anspruch 1,
dadurch **gekennzeichnet**,
daß die Bremse mit einer Schraubenfeder (11) versehen ist oder einem anderen Typ von Feder, welche in dem Keilgehäuse (12) angeordnet ist und dazu dient, den Keilring zu drehen, um eine Kraft zu erzeugen, die den Keilring (10) in Richtung auf die Bremsscheibe bewegt.

3. Bremse nach Anspruch 1,
dadurch **gekennzeichnet**,
daß sie mit zumindest einem federvorgespannten Stift (18) versehen ist, einem O-Ring oder einem anderen flexiblen Element, welches in dem Keilgehäuse/Keilring angeordnet ist und in Richtung des Keilringes/Keilgehäuses hervorsteht, welcher Stift (welche Stifte) dazu dienen, eine Bewegung des Keilrings in Richtung auf die Bremsscheibe zu verhindern, die aus anderen Gründen herrührt als der Abnutzung des Bremsbelages.

4. Bremse nach einem der vorhergehenden Ansprüche,
dadurch **gekennzeichnet**,
daß die Aufnahme (15) einen im wesentlichen U-förmigen Querschnitt hat, der eine Befestigung der Ankerplatte (3) zwischen zwei Schenkeln der Aufnahme ermöglicht, um eine axiale Bewegung der Platte zu erlauben, und daß das direktionale Element (9) eine selbstsichernde Ringscheibe ist, die in der Aufnahme angeordnet ist, oder eine Ringstruktur, die selbst die Aufnahme aufweist.

5. Bremse nach einem der vorhergehenden Ansprüche,
dadurch **gekennzeichnet**,
daß die Bremse mit zumindest einer Hilfsfeder (16) versehen ist, die auf einem Bolzen oder dergleichen (13) zwischen der Aufnahme und der Stirnplatte des abzubremsenden Motors angeordnet ist, um die Beschleunigung des Ankers (3) während der Freigabe der Bremse zu erhöhen.

6. Bremse nach einem der vorhergehenden Ansprüche,
dadurch **gekennzeichnet**,
daß die Aufnahme und das Keilgehäuse auf einem Stehbolzen (13) angeordnet sind, welcher das Keilgehäuse durchsetzt und in die Stirnplatte (1) des abzubremsenden Motors eingeschraubt ist.

7. Bremse nach einem der vorhergehenden Ansprüche,
dadurch **gekennzeichnet**,
daß die Bremse mit einer Feder (21) versehen ist, um den Keil (20) in den Spalt zwischen dem Magnet und dem rückwärtigen Anschlag (19) hineinzupressen, um eine Kraft zu erzeugen, die den Magneten in Richtung auf die Bremsscheibe bewegt.

## Revendications

1. Frein électromagnétique, comprenant un dis-que de frein (6), au moins une surface de friction (4,5) touchant le disque pendant le freinage et attachée à une plaque d'ancrage (3) déplacée par un ou plusieurs ressorts de frein (14) ou par d'autres éléments servant à transmettre la puissance de freinage, au moins un électro-aimant (7,8) qui éloigne, en association avec la plaque d'ancrage, la surface de friction du contact avec le disque de frein lorsqu'un courant est fourni à l'électro-aimant, et des moyens de compensation de l'usure de la surface de friction, lesdits moyens comprenant un coin annulaire (10) ou un coin (20) d'appui de l'aimant (7,8), et un ressort (11,21) chargeant le dit coin annulaire (10) ou le coin (20), caractérisé en ce que les moyens de compensation de l'usure de la surface de friction comprennent au moins une pièce de retenue (15) montée sur un goujon ou un élément équivalent (13) s'étendant la direction axiale du frein, ladite pièce de retenue (15) se déplaçant, au fur et à mesure de l'usure de la matière de friction, avec la plaque d'ancrage (3) vers le disque de frein (6) et entraînant avec elle un élément unidirectionnel (9), ledit élément unidirectionnel (9) limitant le mouvement d'éloignement de la plaque d'ancrage (3) par rapport au disque de frein (6) et maintenant un jeu (e) par rapport à la plaque d'ancrage (3), nécessaire pour le desserrage du frein.

2. Frein suivant la revendication 1, caractérisé en ce que le frein comprend un ressort hélicoïdal (11) ou un autre type de ressort placé dans le boîtier de coin (12) et servant à faire tourner le coin annulaire pour produire une force de déplacement du coin annulaire (10) vers le disque de frein.

3. Frein suivant la revendication 1, caractérisé en ce qu'il comporte au moins une broche élastiquement chargée (18), un joint torique ou un autre élément flexible placé dans le boîtier de coin/coin annulaire et faisant saillie vers le coin annulaire/boîtier de coin, la ou les dites broches servant à empêcher un mouvement du coin annulaire vers le disque de frein résultant de causes autres que l'usure de la matière de friction.

4. Frein suivant une quelconque des revendications précédentes, caractérisé en ce que la pièce de retenue (15) a une section transversale sensiblement en forme de U, permettant à la plaque d'ancrage (3) de se loger entre les deux ailes de la pièce de retenue de manière à autoriser un mouvement axial de la plaque, et en ce que l'élément directionnel (9) est une rondelle à autoblocage placée dans la pièce de retenue, ou une structure de rondelle constituant par elle-même un élément de retenue.

5. Frein suivant une quelconque des revendications précédentes, caractérisé en ce que le frein comprend au moins un ressort auxiliaire (16) placé sur un goujon ou un élément équivalent (13) entre la pièce de retenue et le flasque d'extrémité du moteur à freiner, pour augmenter l'accélération de la plaque d'ancrage (3) pendant le desserrage du frein.

6. Frein suivant une quelconque des revendications précédentes, caractérisé en ce que la pièce de retenue et le boîtier de coin sont placés sur un goujon (13) traversant le boîtier de coin et vissé dans le flasque d'extrémité (1) du moteur à freiner.

7. Frein suivant une quelconque des revendications précédentes, caractérisé en ce que le frein comprend un ressort (21) pour presser le coin (20) dans l'intervalle entre l'aimant et la butée arrière (19), afin de créer une force de déplacement de l'aimant vers le disque de frein.
